# EUROPÄISCHE PATENTSCHRIFT

(11) **EP 3 022 529 B1**
(45) Veröffentlichungstag und Bekanntmachung des Hinweises auf die Patenterteilung: **09.08.2017**
(21) Anmeldenummer: 14738378.0
(22) Anmeldetag: 21.06.2014
(51) Int. Cl.: G01C 21/36

(54) **POSITIONSEINGABE IN EINE NAVIGATIONSEINRICHTUNG EINES FAHRZEUGS**
POSITION INPUT INTO A NAVIGATION DEVICE OF A VEHICLE
SAISIE DE POSITION DANS UN SYSTÈME DE NAVIGATION D'UN VÉHICULE

(30) Priorität: 15.07.2013 DE 102013011823
(43) Veröffentlichungstag der Anmeldung: 25.05.2016
(73) Patentinhaber: Audi AG, 85045 Ingolstadt (DE)
(72) Erfinder: ZÖRB-SCHLIEFER, Arne, 96175 Pettstadt (DE)
(74) Vertreter: Bauer, Dominik Michael
(86) Internationale Anmeldenummer: PCT/EP2014/001692
(87) Internationale Veröffentlichungsnummer: WO 2015/007363

(56) Entgegenhaltungen:
- JP-A- 2004 078 888
- US-A1- 2013 132 887
- US-A1- 2013 166 203

## Beschreibung

Die vorliegende Erfindung betrifft ein Verfahren zur Eingabe von Positionsdaten in eine Navigationseinrichtung eines Fahrzeugs sowie ein Mobilfunkendgerät, welches zur Eingabe von Positionsdaten in eine Navigationseinrichtung eines Fahrzeugs ausgebildet ist.

Zur bestimmungsgemäßen Nutzung einer Navigationseinrichtung eines Fahrzeugs ist es in der Regel erforderlich, zumindest eine Zielposition manuell einzugeben. Dies ist zeitaufwändig und fehlerbehaftet, insbesondere wenn Tippfehler zu falschen Navigationszielen führen.

Aus der US 2005/0149260 A1 ist es bereits bekannt, ein tragbares Gerät in Kommunikationsverbindung zu einer Navigationseinrichtung des Fahrzeugs zu bringen. Das tragbare Gerät hat Zugriff auf Ortsdaten, die einen geografischen Ort kennzeichnen. Die Ortsdaten werden dann vom tragbaren Gerät an die Navigationseinrichtung des Fahrzeugs übermittelt. Nach der Übermittlung tritt ein Fahrer des Fahrzeugs mit der Navigationseinrichtung in Verbindung und sucht die vom tragbaren Gerät übermittelten Ortsdaten. Die Navigationseinrichtung zeigt dem Fahrer die entsprechenden Ortsdaten an.

Ferner offenbart die US 2013/0132887 A1 Nutzerschnittstellenänderungmerkmale für On-Demand-Dienstleistungen unter Nutzung einer tragbaren Rechnereinrichtung. Schließlich offenbart die JP 2004-078888 A ein Bildanzeige- und Navigationssystem.

Zwar erlaubt diese Offenbarung, dass der Fahrer an der Navigationseinrichtung des Fahrzeugs ein Navigationsziel nicht manuell einzugeben braucht, jedoch ist ein entsprechendes Vorhalten eingegebener Positionen durch das tragbare Gerät erforderlich. Der Fahrer muss also statt einer Eingabe an der Navigationseinrichtung eine Eingabe am tragbaren Gerät vornehmen. Damit kann aber die Eingabefreundlichkeit beziehungsweise Ergonomie nicht verbessert werden.

US2013166203A1 offenbart eine Markierung einer Position, eine Kommunikationsverbindung zu einem Fahrzeug und eine Übermittlung der Positionsdaten an das Fahrzeug. Das Dokument offenbart keine manuelle Verschiebung der Positionsmarkierung zum Symbol des Fahrzeugs auf der Ausgabeeinheit des Mobilfunkendgerätes. Dieses Merkmal ermöglicht die Eingabe bzw. die Auswahl eines Fahrzeugs als Ziel der Positionsdatenübermittlung. Laut diesem Dokument soll die Auswahl des Fahrzeugs erfolgen, indem der Benutzer des Mobilfunkendgerätes oder das Mobilfunkendgerät sich genug des Fahrzeugs annähert, so dass eine Bluetooth Verbindung hergestellt werden kann. Es ist somit die Aufgabe der Erfindung, hinsichtlich der Eingabe einer Position an eine Navigationseinrichtung eines Fahrzeugs eine Verbesserung zu bewirken.

Als Lösung wird mit der Erfindung ein Verfahren zur Eingabe einer Position in eine Navigationseinrichtung eines Fahrzeugs gemäß Anspruch 1 sowie ein Mobilfunkendgerät nach dem weiteren unabhängigen Anspruch 8 vorgeschlagen. Insbesondere ist ein Verfahren umfasst, mit den Schritten:
- Anzeigen (10) von Positionen auf einer graphischen Ausgabeeinheit eines Mobilfunkendgerätes,
- Markieren (12) einer der angezeigten Positionen der Ausgabeeinheit mittels einer Markierung,
- Anzeigen (14) einer graphischen Darstellung eines Symbols für ein Fahrzeug mittels der Ausgabeeinheit, zu welchem Fahrzeug das Mobilfunkendgerät fahrzeugspezifische Kommunikationsverbindungsdaten verfügbar hält,
- Verschieben (16) der Markierung zum Symbol des Fahrzeugs oder des Symbols des Fahrzeugs zur Markierung auf der Ausgabeeinheit und
- Übermitteln (18) von den die markierte Position identifizierenden Positionsdaten an die Navigationseinrichtung des Fahrzeugs.

Mit der Erfindung ist es möglich, die Eingabe von Positionen kennzeichnenden Positionsdaten in die Navigationseinrichtung des Fahrzeugs deutlich zu vereinfachen. Der Nutzer braucht nicht mehr Eingaben in Form von manuellem Eintippen vornehmen, sondern er kann vollständig vorhandene Positionsdaten mittels Markieren auswählen und an die Navigationseinrichtung des Fahrzeugs übermitteln. Tippfehler oder dergleichen können weitgehend vermieden werden und der Zeitaufwand für die Eingabe kann deutlich reduziert werden.

Das Mobilfunkendgerät kann ein Handy, ein Smartphone, ein PDA oder dergleichen sein, das eine Kommunikation über ein Mobilfunknetz gemäß einem Mobilfunkstandard wie GSM, UMTS, LTE oder dergleichen erlaubt. Die Anzeige von Positionen kann mittels alphanumerischer Zeichen oder auch in grafischer Form beispielsweise durch die Position identifizierende Zeichen oder dergleichen erfolgen.

Das Markieren ist eine Eingabe, vorzugsweise des Nutzer beziehungsweise des Fahrers. Diese kann manuell, mittels Sprache oder dergleichen erfolgen. Der Nutzer markiert die Positionsdaten auf der Ausgabeeinheit, beispielsweise mittels einer Eingabe über eine Eingabeeinheit wie einer Tastatur oder dergleichen, indem beispielsweise ein Cursor auf die mittels einer Eingabeeinheit angezeigte Positionsdaten verfahren wird und eine entsprechende Eingabe erfolgt. Sodann wird eine grafische Darstellung eines Fahrzeugs beispielsweise in Form eines Symbols mittels der Ausgabeeinheit angezeigt, zu welchem Fahrzeug das Mobilfunkendgerät fahrzeugspezifische Kommunikationsverbindungsdaten verfügbar hält. Das Symbol ist dem Fahrzeug zugeordnet und insbesondere individuell beziehungsweise identifizierend für das Fahrzeug. Das Fahrzeug kann ein Fahrzeug des Nutzers sein, der die Markierung vorgenommen hat. Es können aber auch andere Fahrzeuge sein, die entfernt vom Mobilfunkendgerät positioniert sind. Darüber hinaus besteht natürlich die Möglichkeit, dass bei mehreren Fahrzeugen mehr als ein Fahrzeugsymbol dargestellt wird, vorzugsweise für jedes Fahrzeug ein eigenes, das jeweilige Fahrzeug identifizierendes Symbol, wobei das Mobilfunkendgerät zu jedem der angezeigten Fahrzeuge fahrzeugspezifische Kommunikationsverbindungsdaten verfügbar hält. Die fahrzeugspezifischen Kommunikationsverbindungsdaten können beispielsweise eine Fahrzeugidentifikation sein, mittels der es dem Mobilfunkendgerät ermöglicht wird, eine Kommunikationsverbindung zu dem entsprechenden Fahrzeug herzustellen. Die fahrzeugspezifischen Kommunikationsverbindungsdaten können beispielsweise eine Mobilfunknummer sein, über die das vorzugsweise ausgewählte Fahrzeug kontaktiert werden kann oder dergleichen.

Durch insbesondere manuelles Verschieben der Markierung zum Fahrzeugsymol auf der Ausgabeeinheit kann der Nutzer zugleich auch eine Auswahl bei mehreren, verfügbaren Fahrzeugen vornehmen. Natürlich kann auch mehr als ein Fahrzeug ausgewählt werden. Anschließend erfolgt ein Übermitteln von die markierte Position identifizierenden Positionsdaten an die Navigationseinrichtung des insbesondere ausgewählten Fahrzeugs. Vorzugsweise ist vorgesehen, dass das Mobilfunkendgerät zumindest zeitweise mit dem Fahrzeug in Kommunikationsverbindung steht. Die Kommunikationsverbindung ist vorzugsweise eine drahtlose Verbindung, die beispielsweise unter Nutzung von elektromagnetischen Wellen, insbesondere Funk, Infrarot oder dergleichen, aber auch durch Ultraschall oder ähnlichen Übertragungsmedien ausgebildet sein kann. Die Kommunikationsverbindung kann ein Protokoll nutzen, wie beispielsweise WLAN, Bluetooth™, ZigBee™ oder dergleichen. Darüber hinaus kann auch vorgesehen sein, dass das Mobilfunkendgerät leitungsgebunden mit der Navigationseinrichtung des Fahrzeugs in Kommunikationsverbindung steht, beispielsweise über einen leitungsgebundenen Schnittstellenanschluss wie RS232, USB oder dergleichen.

Vorzugsweise löst das Verschieben der Markierung ein automatisches Übermitteln der Positionsdaten aus. Auch wenn das Verfahren vorzugsweise eine bidirektionale Kommunikation vorsieht, insbesondere auch, wenn ein benutztes Protokoll dies erfordert, kann das Verfahren auch mittels unidirektionaler Kommunikation nach dem Prinzip des Rundfunks ausgeführt werden. In diesem Fall werden lediglich die die ausgewählte Position identifizierenden Positionsdaten an die Navigationseinrichtung des Fahrzeugs übermittelt. Nach der Übermittlung kann die Kommunikationsverbindung für andere Zwecke freigegeben werden. Eine Rückmeldung erfolgt in diesem Falle nicht.

Die Erfindung ermöglicht es somit, auf einfache Weise Positionsdaten in die Navigationseinrichtung des Fahrzeugs einzugeben.

Es ist vorgesehen, dass vor dem Schritt des Übermittelns eine Kommunikationsverbindung zu dem Fahrzeug hergestellt wird. Beispielsweise kann das Herstellen der Kommunikationsverbindung zum Fahrzeug durch den Schritt des Verschiebens der Markierung automatisch ausgelöst werden. Die Kommunikationsverbindung kann vorzugsweise auf einen Zeitraum begrenzt werden, der für die Übermittlung der Positionsdaten erforderlich ist. Hierdurch können Energie und/oder Kommunikationskanalkapazität eingespart werden.

Als Ausgabeeinheit wird eine Ein- und Ausgabeeinheit verwendet und das Markieren erfolgt durch eine manuelle Betätigung an einer Position und/oder das Verschieben erfolgt durch eine manuelle Betätigung von der Position zum angezeigten Fahrzeug oder umgekehrt. Diese Ausgestaltung erlaubt es, besonders einfach ergonomisch günstige Eingaben zu ermöglichen. Insbesondere ermöglicht es diese Ausgestaltung, dass der Nutzer mittels beispielsweise einer Betätigung eines Fingers ein ergonomisch günstiges und fehlerreduziertes Markieren vornimmt. Dem Grunde nach gilt das gleiche auch für das Verschieben. Die Ein- und Ausgabeeinheit kann zu diesem Zweck als berührungssensitiver Bildschirm oder dergleichen ausgebildet sein.

Darüber hinaus kann das Verschieben der Markierung ein automatisches Herstellen einer Kommunikationsverbindung zu dem Fahrzeug unter Berücksichtigung der fahrzeugspezifischen Kommunikationsverbindungsdaten bewirken. Das automatische Herstellen erfolgt also danach unter Berücksichtigung fahrzeugspezifischer Kommunikationsverbindungsdaten des Fahrzeugs, das beispielsweise mittels des Schritts des Verschiebens der Markierung beziehungsweise des Symbols ausgewählt ist. So kann beispielsweise vorgesehen sein, dass das Mobilfunkendgerät eine Mobilfunknummer des Fahrzeugs anwählt, um die Kommunikationsverbindung herzustellen. Darüber hinaus kann natürlich auch vorgesehen sein, dass das Mobilfunkendgerät eine Nahfunkverbindung beispielsweise basierend auf dem WLAN-Standard oder dergleichen zu dem Fahrzeug herstellt, das mittels des Verschiebens der Markierung ausgewählt ist.

Insgesamt kann natürlich auch vorgesehen sein, dass das Verschieben der Markierung nicht nur zu einem Fahrzeug auf der Ausgabeeinheit erfolgt, sondern zu mehreren oder allen Fahrzeugen, die mittels Symbolen auf der Ausgabeeinheit angezeigt werden. Dies erlaubt es, Navigationseinrichtungen mehrerer Fahrzeuge gleichzeitig mit den gewünschten Positionsdaten zu versehen.

Gemäß einer weiteren Ausgestaltung kann vorgesehen sein, dass das Anzeigen der grafischen Darstellung des Fahrzeugs eine Fahrzeugidentifikationsinformation umfasst. Die Fahrzeugidentifikationsinformation kann beispielsweise ein Kennzeichen des Fahrzeugs sein, ein Fahrzeughalter, Kombinationen hiervon und/oder dergleichen. Dadurch ist es möglich, insbesondere wenn mehrere Fahrzeuge auswählbar sind, gezielt ein oder mehrere Fahrzeuge auf einfache Weise auszuwählen und mit den gewünschten Positionsdaten zu versehen.

Gemäß einer weiteren Ausgestaltung können mehrere Fahrzeugen zugeordnete Symbole angezeigt und als Fahrzeug dasjenige ausgewählt werden, dessen Position der Position des Mobilfunkendgerätes am nächsten ist. Besonders vorteilhaft ist dies, wenn vorgesehen ist, dass mittels des Mobilfunkendgerätes die Navigationseinrichtung eines eigenen Fahrzeugs des Nutzers mit den Positionsdaten versehen werden soll. Beispielsweise kann der Nutzer hierdurch seine Navigationseinrichtung bereits dann mit den gewünschten Positionsdaten versehen, wenn er sich noch nicht in seinem Fahrzeug befindet. Sobald er dann sein Fahrzeug erreicht, kann er die Fahrt starten, ohne an der Navigationseinrichtung noch Einstellungen vornehmen zu müssen.

Vorzugsweise wird als Position ein Navigationsziel verwendet. Natürlich können auch mehrere Navigationsziele verwendet werden, wobei vorzugsweise eine Reihenfolge der Navigationsziele zuvor festgelegt wird. Letzteres ermöglicht es, eine Routenplanung vorzunehmen, so dass der Nutzer, ohne weitere Eingaben vornehmen zu müssen, automatisch in der vorgegebenen Reihenfolge zu den gewünschten Navigationszielen geführt wird.

Eine weitere Ausgestaltung der Erfindung sieht vor, dass der Schritt des Anzeigens von Positionen auf der grafischen Ausgabeeinheit des Mobilfunkendgerätes ein Anzeigen einer Karte auf der grafischen Ausgabeeinheit des Mobilfunkendgerätes und der Schritt des Markierens der Position ein Markieren der Position in der auf der Ausgabeeinheit angezeigten Karte und ein Anzeigen einer Markierung an der markierten Position in der auf der Ausgabeeinheit angezeigten Karte umfasst. Diese Ausgestaltung erweist sich als besonders günstig hinsichtlich der Ergonomie, da sie es dem Nutzer erlaubt, auf einfache intuitive Weise eine Position ohne großen Aufwand auszuwählen. Insbesondere in Verbindung mit dem berührungsempfindlichen Bildschirm ergibt sich eine außerordentlich nutzerfreundliche und ergonomisch günstige Bedienung. Die Karte kann beispielsweise eine topografische Karte oder dergleichen sein. Natürlich kann auch eine dreidimensionale Kartendarstellung vorgesehen sein, die darüber hinaus vorzugsweise hinsichtlich Maßstab und Verschiebung einstellbar ist. Aufgrund des Markierens der Position in der Karte ermittelt das Mobilfunkendgerät vorzugsweise zugehörige Positionsdaten, die an die Navigationseinrichtung des Fahrzeugs übermittelt werden. Der Nutzer braucht also keine detaillierten Eingaben in Form von Tasteneingaben vornehmen, wodurch die Eingabe nicht nur schneller, sondern auch zuverlässiger erfolgt. Als besonders erweist es sich, wenn erst mit dem Markieren ein oder mehrere Fahrzeuge ergänzend angezeigt werden. Die Anzeige kann mittels geeigneter Fahrzeugsymbole erfolgen, die vorzugsweise eine Identifikation beinhalten. Der Nutzer kann nun durch Verschieben der mittels Markieren der Position erzeugten Markierung auf das gewünschte Fahrzeugsymbol eine Zuordnung herstellen. Alternativ kann natürlich auch in dualer Weise ein Verschieben des Fahrzeugsymbols zur Markierung vorgesehen sein. Anschließend werden die zur Position ermittelten Positionsdaten vom Mobilfunkendgerät an die Navigationseinrichtung des ausgewählten Fahrzeugs übermittelt.

In einer weiteren Ausgestaltung ist ergänzend vorgesehen, dass die Navigationseinrichtung eine Fahrzeugposition an das Mobilfunkendgerät übermittelt, welches die Fahrzeugposition mittels der Ausgabeeinheit anzeigt. Die Anzeige kann über Koordinatendaten oder dergleichen erfolgen. Besonders vorteilhaft erweist es sich jedoch, wenn die Anzeige grafisch, insbesondere mittels eines geeigneten Symbols in der Karte dargestellt wird. Auf diese Weise kann beispielsweise auch eine Information an den Nutzer geliefert werden, an welcher Stelle sich ein Fahrzeug befindet.

Mit der Erfindung wird ferner ein Mobilfunkendgerät vorgeschlagen, welches zur Eingabe von Positionsdaten in eine Navigationseinrichtung eines Fahrzeugs ausgebildet ist, wobei das Mobilfunkendgerät eingerichtet ist, das Verfahren der Erfindung auszuführen. Durch diese Maßnahme kann eine Nutzung, insbesondere eine Eingabeunterstützung für eine Navigationseinrichtung des Fahrzeugs, erreicht werden. Der Benutzer benötigt hierfür keine separaten Mittel, sondern er kann sein ohnehin vorhandenes Mobilfunkendgerät zu diesem Zweck nutzen. Das Mobilfunkendgerät kann hierfür mit geeigneten Programmen oder Programmsegmenten ausgerüstet sein, die es erlauben, das Verfahren auf einer Recheneinrichtung des Mobilfunkendgerätes auszuführen.

Weitere Vorteile und Merkmale sind der folgenden Beschreibung eines Ausführungsbeispiels zu entnehmen. Das Ausführungsbeispiel dient lediglich der Erläuterung der Erfindung und soll diese nicht beschränken.

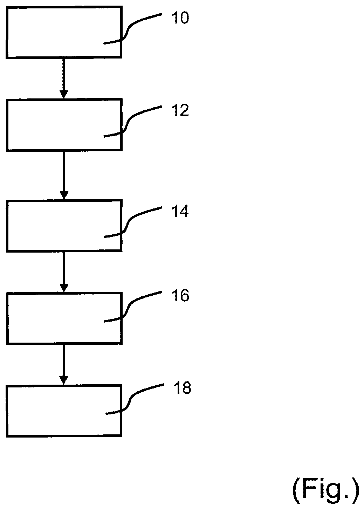

Es zeigt die einzige Figur in schematischer Ansicht ein Flussdiagramm für einen Verfahrensablauf der Erfindung.

Das Verfahren dient zur Eingabe einer Position in eine Navigationseinrichtung eines Fahrzeugs, insbesondere eines Navigationszieles. Der Verfahrensablauf ist wie folgt:

In einem Schritt 10 werden zunächst Positionen auf einer grafischen Ausgabeeinheit eines Mobilfunkendgeräts in einer Karte angezeigt. Vorliegend kann das Anzeigen von Positionen durch die Darstellung der Karte selbst gebildet sein.

In einem nächsten Schritt 12 markiert ein Nutzer eine Position auf der Ausgabeeinheit, die vorliegend als berührungssensitiver Bildschirm ausgebildet ist. Zum Zwecke des Markierens berührt der Nutzer die gewünschte Position mittels eines seiner Finger. Eine Steuerung, die das Verfahren ausführt, detektiert die Nutzereingabe und sieht eine entsprechende Markierung in der durch die Ausgabeeinheit dargestellten Karte vor. Zugleich wird in einem Schritt 14 eine grafische Darstellung eines Fahrzeugs auf der Ausgabeeinheit angezeigt, zu welchem Fahrzeug das Mobilfunkendgerät fahrzeugspezifische Kommunikationsverbindungsdaten verfügbar hält. In der vorliegenden Ausgestaltung ist dies das Fahrzeug des Nutzers, der die Navigationseinrichtung des Fahrzeugs mit einem Navigationsziel programmieren möchte.

In einem weiteren Schritt 18 verschiebt der Nutzer die Markierung, die auf der Ausgabeeinheit dargestellt ist, mittels einer entsprechenden Verschiebebewegung auf dem Bildschirm zur graphischen Darstellung des Fahrzeugs, nämlich dem Fahrzeugsymbol, das auf der Ausgabeeinheit mittels eines entsprechenden Fahrzeugsymbols dargestellt ist. In einem folgenden Schritt 18 übermittelt das Mobilfunkendgerät die die Position identifizierenden Positionsdaten an die Navigationseinrichtung des Fahrzeugs. Auf diese Weise ist die Position in der Navigationseinrichtung des Fahrzeugs vorhanden und kann als Ziel durch den Nutzer ausgewählt werden. Natürlich kann auch vorgesehen sein, dass die übermittelte Position automatisch als Ziel in der Navigationseinrichtung eingegeben wird. Sobald der Fahrer beziehungsweise Nutzer des Fahrzeugs seine Fahrt startet, kann, ohne dass weitere Eingaben vorgenommen werden müssen, eine Navigationsunterstützung des Fahrers mittels der Navigationseinrichtung erfolgen.

Die vorgenannten Ausführungsbeispiele dienen lediglich der Erläuterung der Erfindung und sollen diese nicht beschränken. Insbesondere können natürlich Merkmale und Ausführungsbeispiele in beliebiger Weise miteinander kombiniert werden, um zu weiteren bedarfsgerechten Ausgestaltungen zu gelangen, ohne den Gedanken der Erfindung zu verlassen.

Insbesondere können verfahrensbezogene Merkmale entsprechend auf Vorrichtungsmerkmale angewendet werden und umgekehrt. Darüber hinaus kann in dualer Weise statt des Verschiebens der Markierung zum Fahrzeugsymbol natürlich auch ein Verschieben des Fahrzeugsymbols zur Markierung vorgesehen sein.

Das Ausführungsbeispiel dient lediglich der Erläuterung der Erfindung und soll diese nicht beschränken.

## Patentansprüche

1. Verfahren zur Eingabe von Positionsdaten in eine Navigationseinrichtung eines Fahrzeugs, mit den Schritten:
- Anzeigen (10) von Positionen auf einer graphischen Ausgabeeinheit eines Mobilfunkendgerätes,
- Markieren (12) einer der angezeigten Positionen der Ausgabeeinheit mittels einer Markierung, wobei als Ausgabeeinheit eine Ein- und Ausgabeeinheit verwendet wird und dass das Markieren (12) durch eine manuelle Betätigung an der Position erfolgt,
- Anzeigen (14) einer graphischen Darstellung eines Symbols für ein Fahrzeug mittels der Ausgabeeinheit, zu welchem Fahrzeug das Mobilfunkendgerät fahrzeugspezifische Kommunikationsverbindungsdaten verfügbar hält,
- Verschieben (16) der Markierung zum Symbol des Fahrzeugs oder des Symbols des Fahrzeugs zur Markierung mittels einer manuellen Betätigung auf der Ausgabeeinheit und
- Übermitteln (18) von den die markierte Position identifizierenden Positionsdaten an die Navigationseinrichtung des Fahrzeugs, wobei vor dem Schritt des Übermittelns (18) eine Kommunikationsverbindung zu dem Fahrzeug hergestellt wird.

2. Verfahren nach Anspruch 1, **dadurch gekennzeichnet, dass** das Verschieben (16) der Markierung ein automatisches Herstellen einer Kommunikationsverbindung zu dem Fahrzeug unter Berücksichtigung der fahrzeugspezifischen Kommunikationsverbindungsdaten bewirkt.

3. Verfahren nach Anspruch 1 oder 2, **dadurch gekennzeichnet, dass** das Anzeigen (14) des Symbols des Fahrzeugs eine Fahrzeugidentifikationsinformation umfasst.

4. Verfahren nach einem der Ansprüche 1 bis 3, **dadurch gekennzeichnet, dass** mehrere Fahrzeugen zugeordnete Symbole angezeigt werden und als Fahrzeug dasjenige ausgewählt wird, dessen Position einer Position des Mobilfunkendgerätes am nächsten ist.

5. Verfahren nach einem der Ansprüche 1 bis 4, **dadurch gekennzeichnet, dass** als Position ein Navigationsziel verwendet wird.

6. Verfahren nach einem der Ansprüche 1 bis 5, **dadurch gekennzeichnet, dass** der Schritt des Anzeigens (10) von Positionen auf der graphischen Ausgabeeinheit des Mobilfunkendgerätes ein Anzeigen einer Karte auf der graphischen Ausgabeeinheit des Mobilfunkendgerätes und der Schritt des Markierens (12) der Position ein Markieren der Position in der auf der Ausgabeeinheit angezeigten Karte und ein Anzeigen einer Markierung an der markierten Position in der auf der Ausgabeeinheit angezeigten Karte umfasst.

7. Verfahren nach einem der Ansprüche 1 bis 6, **dadurch gekennzeichnet, dass** die Navigationseinrichtung eine Fahrzeugposition an das Mobilfunkendgerät übermittelt, welches die Fahrzeugposition mittels der Ausgabeeinheit anzeigt.

8. Mobilfunkendgerät, welches zur Eingabe von Positionsdaten in eine Navigationseinrichtung eines Fahrzeugs ausgebildet ist, **dadurch gekennzeichnet, dass** das Mobilfunkendgerät eingerichtet ist, das Verfahren nach einem der vorhergehenden Ansprüche auszuführen.

## Claims

1. Method for inputting position data in a navigation device of a vehicle, comprising the steps of:
- displaying (10) of positions on a graphical output unit of a mobile radio end device;
- marking (12) one of the displayed positions by a mark, wherein an input and output unit is used as output unit and the marking (12) is accomplished through a manual operation on the position;
- displaying (14) a graphical representation of a symbol for a vehicle via the output unit, for which vehicle the mobile radio end device provides vehicle-specific communication link data;
- shifting (16) the mark to the symbol of the vehicle or the symbol of the vehicle to the mark through a manual operation on the output unit and
- transmitting (18) the position data, which identify the marked position, to the navigation device of the vehicle, wherein before the step of transmitting (18) a communication link to the vehicle is established.

2. Method according to claim 1, **characterized in that** the shifting (16) of the mark causes an automatic establishment of a communication link to the vehicle taking into account the vehicle-specific communication link data.

3. Method according to claim 1 or 2, **characterized in that** the displaying (14) of the symbol of the vehicle includes vehicle identification information.

4. Method according to any of claims 1 to 3, **characterized in that** symbols associated with a plurality of vehicles are displayed and a vehicle among the plurality of vehicles is selected whose location is the nearest to a position of the mobile radio end device.

5. Method according to any of claims 1 to 4, **characterized in that** a navigation destination is used as position.

6. Method according to any of claims 1 to 5, **characterized in that** the step of displaying (10) of positions on the graphical output unit of the mobile radio end device includes displaying a map on the graphical output unit of the mobile radio end device, and the step of marking (12) the position includes a marking of the position on the map displayed on the output unit and displaying a mark on the marked position on the map displayed on the output unit.

7. Method according to any of claims 1 to 6, **characterized in that** the navigation device transmits a vehicle position to the mobile radio end device which displays the vehicle position via the output unit.

8. Mobile radio end device configured for inputting position data in a navigation device of a vehicle, **characterized in that** the mobile radio end device is configured to carry out the method according to any of the preceding claims.

## Revendications

1. Procédé d'entrée de données de position dans un dispositif de navigation d'un véhicule, avec les étapes :
- affichage (10) de positions sur une unité de sortie graphique d'un terminal de radiocommunication mobile,
- marquage (12) de l'une des positions affichées de l'unité de sortie au moyen d'une marque, une unité d'entrée et de sortie étant utilisée comme unité de sortie et le marquage (12) s'effectuant par un actionnement manuel au niveau de la position,
- affichage (14) d'une représentation graphique d'un symbole pour un véhicule au moyen de l'unité de sortie, véhicule pour lequel le terminal de radiocommunication mobile maintient disponible des données de liaison de communication spécifiques au véhicule,
- déglacement (16) de la marque vers le symbole du véhicule ou du symbole du véhicule vers la marque au moyen d'un actionnement manuel sur l'unité de sortie et
- transmission (18) des données de position identifiant la position marquée au dispositif de navigation du véhicule, une liaison de communication vers le véhicule étant établie avant l'étape de la transmission (18).

2. Procédé selon la revendication 1, **caractérisé en ce que** le déplacement (16) de la marque provoque un établissement automatique d'une liaison de communication vers le véhicule en tenant compte des données de liaison de communication spécifiques au véhicule.

3. Procédé selon la revendication 1 ou 2, **caractérisé en ce que** l'affichage (14) du symbole du véhicule comprend une information d'identification de véhicule.

4. Procédé selon l'une des revendications 1 à 3, **caractérisé en ce que** plusieurs symboles associés à des véhicules sont affichés et celui dont la position est la plus proche d'une position du terminal de radiocommunication mobile est sélectionné comme véhicule.

5. Procédé selon l'une des revendications 1 à 4, **caractérisé en ce qu'**une destination de navigation est utilisée comme position.

6. Procédé selon l'une des revendications 1 à 5, **caractérisé en ce que** l'étape de l'affichage (10) de positions sur l'unité de sortie graphique du terminal de radiocommunication mobile comprend un affichage d'une carte sur l'unité de sortie graphique du terminal de radiocommunication mobile et l'étape du marquage (12) de la position comprend un marquage de la position sur la carte affichée sur l'unité de sortie et un affichage d'une marque au niveau de la position marquée sur la carte affichée sur l'unité de sortie.

7. Procédé selon l'une des revendications 1 à 6, **caractérisé en ce que** le dispositif de navigation transmet une position de véhicule au terminal de radiocommunication mobile qui affiche la position de véhicule au moyen de l'unité de sortie.

8. Terminal de radiocommunication mobile, qui est conçu pour l'entrée de données de position dans un dispositif de navigation d'un véhicule, **caractérisé en ce que** le terminal de radiocommunication mobile est équipé pour mettre en oeuvre le procédé selon l'une des revendications précédentes.
